# EUROPÄISCHE PATENTSCHRIFT

(11) **EP 2 966 853 B1**
(45) Veröffentlichungstag und Bekanntmachung des Hinweises auf die Patenterteilung: **05.04.2017**
(21) Anmeldenummer: 15173764.0
(22) Anmeldetag: 25.06.2015
(51) Int. Cl.: H04N 5/225, H02G 3/06

(54) **AUTOMATISIERUNGSGERÄT MIT MONTAGEHILFE**
AUTOMATION DEVICE WITH MOUNTING AID
APPAREIL D'AUTOMATISATION DOTÉ D'AIDE AU MONTAGE

(30) Priorität: 11.07.2014 DE 102014109783
(43) Veröffentlichungstag der Anmeldung: 13.01.2016
(73) Patentinhaber: Pilz GmbH & Co. KG, 73760 Ostfildern (DE)
(72) Erfinder: Veit, Andreas, 73760 Ostfildern (DE)
(74) Vertreter: Witte, Weller & Partner Patentanwälte mbB

(56) Entgegenhaltungen:
- DE-A1- 1 814 508
- DE-A1- 3 018 119
- DE-A1-102009 033 948

## Beschreibung

Die vorliegende Erfindung betrifft ein Automatisierungsgerät für eine automatisierte Anlage, mit einem Gehäuse, das einen Elektronikteil umgibt, und mit einer Anschlusskomponente zum Anschließen eines Kabels, wobei die Anschlusskomponente mindestens eine plane Seitenfläche aufweist, sowie ein Verfahren zur Montage eines solchen Automatisierungsgeräts. Gattungsgemäße Automatisierungsgeräte sind aufgrund ihrer vielfältigen Anwendung in industriellen Produktionsumgebungen bekannt.

Automatisierungsgeräte im Sinne der vorliegenden Erfindung sind Geräte, die zur Aufnahme, Verarbeitung und/oder Ausgabe von Signalen dienen, mit denen eine technische Anlage, beispielsweise in einem Produktionsprozess, automatisiert betrieben wird. Die Erfindung betrifft insbesondere Automatisierungsgeräte, die im "Feld" eingesetzt werden und dementsprechend gegen starken Schmutz, Späne, Feuchtigkeit und andere raue Umwelteinflüsse, die typischerweise in Produktionsumgebungen auftreten, geschützt sein müssen. Mit dem Begriff "Feld" wird in der Automatisierungstechnik allgemein der Bereich außerhalb von geschlossenen Schaltschränken oder abgetrennten Leitwarten bezeichnet. In einem bevorzugten Beispiel betrifft die Erfindung einen Kamerasensor, der zum Überwachen des gefährlichen Arbeitsbereichs an einer Presse und daher zur Montage direkt im Arbeitsbereich der Presse ausgebildet ist. Die Erfindung ist jedoch nicht auf dieses Gerät beschränkt und kann gleichermaßen bei anderen Automatisierungsgeräten eingesetzt werden, insbesondere bei Geräten, die die Schutzart IP44 und höher gemäß IEC 60529 erfüllen müssen.

Mit zunehmender Komplexität und steigendem Automatisierungsgrad von Maschinen und Anlagen hat sich die Anzahl der Automatisierungsgeräte für die Überwachung und Steuerung eines Prozesses stetig erhöht. Darüber hinaus gibt es seit Jahren Bestrebungen, die Steuerungsintelligenz vermehrt in die Feldebene zu verlagern, wodurch eine höhere Flexibilität bei der Gestaltung von Anlagen und Maschinen erreicht werden soll. Dieser Trend zu Dezentralisierung hat Auswirkungen auf die Komplexität der Feldgeräte, die in solch einem Szenario lokal, d.h. im "Feld" einen Teil der Steuerungsaufgaben wahrnehmen müssen. Insgesamt werden somit immer mehr Automatisierungsgeräte benötigt, die komplexe Aufgaben unter den rauen Bedingungen einer Produktionsumgebung wahrnehmen müssen. Solche Geräte sind entsprechend teuer und aufwendig in der Fertigung. Grundsätzlich ist es daher ein Anliegen, die Kosten der Herstellung von Automatisierungsgeräten und insbesondere die Kosten bei der Montage und Inbetriebnahme zu senken.

Eine schwierige Problemstelle bei der Gestaltung und Herstellung von feldtauglichen Geräten für die Automatisierung ist der üblicherweise benötigte Kabelanschluss zum Zuführen und/oder Bereitstellen von Steuersignalen, Massepotentialen und/oder Betriebsspannungen. Die Signale, Potentiale oder Betriebsspannungen müssen von außen in das Gehäuse des Feldgerätes hinein gebracht werden oder vom Gehäuseinneren nach außen geführt werden, ohne dass die Staub- und/oder Wasserdichtheit der Geräte an dieser Schnittstelle beeinträchtigt wird. In der Regel erfordert dies geeignete Dichtungen, die es dann schwierig machen, eine Kabelbuchse o. dgl. nach erfolgter Montage noch einmal auszurichten bzw. anders zu positionieren. Aufgrund enger Platzverhältnisse in dem Gehäuse ist eine "tolerante" Kabelzuführung, die also nicht genau ausgerichtet werden muss, häufig auch problematisch. Es gibt daher zahlreiche Fälle, in denen vor allem die Montage einer Kabelbuchse (allgemein einer Anschlusskomponente, die bspw. einen Stecker in Ergänzung oder anstelle einer Buchse beinhalten kann) sehr aufwändig und damit teuer ist.

Vor diesem Hintergrund ist es eine Aufgabe der vorliegenden Erfindung, ein Automatisierungsgerät der eingangs genannten Art anzugeben, welches günstig in der Herstellung ist und insbesondere eine einfache Montage einer Anschlusskomponente ermöglicht. Dabei soll das Automatisierungsgerät auch eine hohe Schutzart, wie insbesondere IP 44 und besonders bevorzugt IP67, ermöglichen.

Gemäß einem Aspekt der vorliegenden Erfindung wird diese Aufgabe durch ein Automatisierungsgerät gelöst, mit einem Gehäuse, das einen Elektronikteil umschließt, mit einer Anschlusskomponente zum Befestigen eines Kabels, wobei die Anschlusskomponente mindestens eine plane Seitenfläche aufweist, und mit einer Montagehilfe zum Fixieren der Anschlusskomponente an dem Gehäuse in einer definierten Position, wobei die Montagehilfe eine Aufnahme an einer Wand des Gehäuses und ein Montageplättchen aufweist, das verdrehsicher in die Aufnahme eingelegt ist, wobei die Aufnahme eine erste Durchgangsöffnung beinhaltet ist, in die die Anschlusskomponente hineinreicht, wobei das Montageplättchen eine zweite Durchgangsöffnung mit einer geraden Innenkontur besitzt, die zusammen mit der ersten Durchgangsöffnung eine Halterung für die Anschlusskomponente bildet, und wobei die mindestens eine plane Seitenfläche in der Halterung glatt an der geraden Innenkontur anliegt.

Gemäß einem weiteren Aspekt der vorliegenden Erfindung wird diese Aufgabe durch ein Verfahren zur Montage eines Automatisierungsgeräts mit einem Elektronikteil gelöst, mit den Schritten: Bereitstellen eines rohrförmigen Hohlkörpers zur Bildung eines Gehäuses, Bereitstellen eines rohrförmigen Hohlkörpers zur Bildung eines Gehäuses, Bereitstellen einer Anschlusskomponente zum Befestigen eines Kabels, wobei die Anschlusskomponente mindestens eine plane Seitenfläche aufweist, Herstellen einer Aufnahme für ein definiertes Montageplättchen an einer Wand des Gehäuses, Herstellen einer ersten Durchgangsöffnung durch die Wand in der Aufnahme, Bereitstellen eines Montageplättchens, das eine zweite Durchgangsöffnung mit einer geraden Innenkontur besitzt, und Einlegen des Montageplättchens in die Aufnahme, so dass die zweite Durchgangsöffnung zusammen mit der ersten Durchgangsöffnung eine Halterung für die Anschlusskomponente bildet, Durchstecken der Anschlusskomponente durch die erste und die zweite Durchgangsöffnung, und Befestigen der Anschlusskomponente, wobei das Montageplättchen in der Aufnahme mit einem Formschluss verdrehsicher fixiert wird, und wobei die mindestens eine plane Seitenfläche (66, 68) glatt an der geraden Innenkontur anliegt.

Vorzugsweise beinhaltet das Gehäuse einen Hohlkörper mit einer weitgehend geschlossenen Mantelfläche, durch die das Eindringen von Fremdkörpern, Staub und Feuchtigkeit ins Gehäuse minimiert werden soll. Vorzugsweise hat der Hohlkörper eine vollständig geschlossene Mantelfläche, die nur an den Stellen Öffnungen aufweist, an denen Komponenten des Automatisierungsgeräts aus dem Gehäuse heraus treten. In jedem Fall ist zumindest eine Anschlusskomponente für die Kommunikation und/oder Stromversorgung an dem Gehäuse befestigt. Über die Anschlusskomponente kann das Automatisierungsgerät an eine übergeordnete Steuereinheit und/oder an eine Spannungsversorgung angeschlossen werden. Vorteilhaft handelt es sich bei der Anschlusskomponente um einen Normanschluss, bspw. einen Steckverbinder für gängige Feldbussysteme wie Profibus/Profinet oder SafetyNET p®.

Die Montagehilfe ist hier zweiteilig mit einem ersten Element, das direkt am Gehäuse ausgebildet ist, und einem zweiten Element als separates Bauteil. Das erste Element ist eine Aufnahme, insbesondere in Form einer topfartigen Vertiefung mit einer ebenen Grundfläche, die in der Mantelfläche des Gehäuses ausgebildet ist. In der Aufnahme und insbesondere am Grund der Vertiefung ist eine erste Durchgangsöffnung angeordnet, durch die die Anschlusskomponente in das Gehäuseinnere hineinreicht oder aus dem Gehäuseinneren herausreicht. Das zweite Element ist ein Montageplättchen, das in die Aufnahme und insbesondere in die Vertiefung einlegbar ist. In einigen Ausführungsbeispielen füllt das Montageplättchen die Vertiefung passgenau aus, so dass trotz der Vertiefung eine weitgehend plane Mantelfläche des Gehäuses erhalten bleibt. Das Montageplättchen ist verdrehsicher in der Aufnahme gehalten. In einigen Ausführungsbeispielen entsteht im eingelegten Zustand ein vorzugsweise umlaufender Formschluss zwischen dem äußeren Rand des Montageplättchens und dem inneren Rand der Vertiefung, so dass Kräfte, die auf den Außenrand des Montageplättchens wirken, auf das Gehäuse übertragen werden. Das Montageplättchen weist ferner eine zweite Durchgangsöffnung auf. Die Innenkontur der zweiten Durchgangsöffnung entspricht zumindest teilweise einer definierten Außenkontur der Anschlusskomponente und weist mindestens einen geraden Abschnitt auf. Befindet sich das Montageplättchen in der Aufnahme, fluchtet die zweite Durchgangsöffnung mit der ersten Durchgangsöffnung und bildet zusammen mit der ersten Durchgangsöffnung eine vorzugsweise ringförmige Halterung, in die die Anschlusskomponente eingesteckt ist und dort fixiert werden kann. Bevorzugt ist die Öffnungsfläche der ersten Durchgangsöffnung größer als die Öffnungsfläche der zweiten Durchgangsöffnung. Ferner ist es bevorzugt, wenn die Öffnungsfläche der ersten und zweiten Durchgangsöffnung von ihrer Form her unterschiedlich sind, so dass Teile des Montageplättchens die erste Durchgangsöffnung teilweise bedecken. Nach der Montage der Anschlusskomponente liegt eine plane Seitenfläche der Anschlusskomponente an dem geraden Abschnitt der zweiten Durchgangsöffnung an. Somit wird die Anschlusskomponente wirksam gegen eine Verdrehung um eine Achse senkrecht zur Öffnungsfläche der Durchgangsöffnungen in der Aufnahme gehalten. Die Anschlusskomponenten kann daher in einer exakten Position und Orientierung an dem Gehäuse befestigt werden.

Die Zweiteilung der Montagehilfe erleichtert die Montage der Anschlusskomponente, da die Anschlusskomponente zunächst nur in die erste Durchgangsöffnung am Gehäuse eingebracht werden muss und erst in einem zweiten Schritt mittels des Montageplättchen verdrehsicher fixiert wird. Darüber hinaus wird die Herstellung des Gehäuses sehr vereinfacht, da die erste Durchgangsöffnung eine einfache Bohrung sein kann. Diese ist leichter und kostengünstiger zu fertigen als ein passgenauer, von einer Kreisform abweichender Ausschnitt in der Mantelfläche des Gehäuses. So können insbesondere rohrförmige Hohlkörper sehr vorteilhaft für das Gehäuse verwendet werden, bei denen kostengünstige Stanz- oder Räumverfahren nicht ohne Weiteres angewendet werden können, um eine passende Aufnahme für die Anschlusskomponente herzustellen.

Die Verwendung eines separaten Montageplättchens erhöht zudem die Flexibilität, da sich die Aufnahme sehr einfach an unterschiedliche Anschlusskomponenten anpassen lässt, indem das Montageplättchen ausgetauscht wird. Der Gehäusegrundkörper muss hierzu nicht verändert werden. Schließlich kann das Gehäuse auch mit der Montagehilfe sehr einfach und zuverlässig gegen das Eindringen von Schmutz und Feuchtigkeit geschützt werden, so dass eine hohe Schutzart im Sinne der eingangsgenannten Norm erreicht werden kann. Das neue Automatisierungsgerät ist somit günstig herzustellen, lässt sich einfach montieren und ist dennoch für eine hohe Schutzart geeignet. Die oben genannte Aufgabe ist vollständig gelöst.

In einer bevorzugten Ausgestaltung beinhaltet die Anschlusskomponente einen Körper mit einem radial vorspringenden Flansch und ein Befestigungselement, wobei der Flansch und das Befestigungselement das Montageplättchen in der Aufnahme einklemmen.

In dieser Ausgestaltung lässt sich durch die Anschlusskomponente eine besonders einfache Montage erreichen. Der Körper ragt durch die Durchgangsöffnungen in das Innere des Gehäuses und wird mittels des Befestigungselements, bspw. eine Schraubmutter, in der Halterung fixiert. Dabei klemmen der Flansch und das Befestigungselement das Montageplättchen von zwei entgegengesetzten Seiten ein und fixieren es so in der Aufnahme. Die Ausrichtung und endgültige Fixierung der Anschlusskomponente kann somit im Wesentlichen von einer Seite her, insbesondere von der Gehäuseaußenseite her erfolgen, und ermöglicht eine einfache Montage auch bei Gehäusen, bei denen die Anschlussstelle von innen nur schwer zugänglich ist.

In einer weiteren Ausgestaltung beinhaltet die Aufnahme eine topfartige Vertiefung in der Wand, die das Montageplättchen verdrehsicher an der Wand fixiert.

In dieser Ausgestaltung sorgt die topfartige Vertiefung dafür, dass das Montageplättchen sich nicht relativ zu der Gehäusewand verdrehen kann. Die topfartige Vertiefung kann einerseits recht kostengünstig hergestellt werden, insbesondere durch eine einfache Bohr- und/oder Fräsbearbeitung der Gehäusewand. Dies gilt im besonderen Maße, wenn die Aufnahme an der Gehäuseaußenseite angeordnet ist. Andererseits beeinträchtigt die topfartige Vertiefung nicht die Wasser- und Staubdichtheit des Gehäusekörpers. Daher ist die Ausgestaltung sehr vorteilhaft

In einer weiteren vorteilhaften Ausgestaltung ist das Montageplättchen vollflächig in die topfartige Vertiefung eingelegt. Vorzugsweise füllt das Montageplättchen die Vertiefung dabei möglichst vollständig aus und/oder schließt plan mit der umgebenden Oberfläche der Gehäusewand ab..

In dieser Ausgestaltung lässt sich die Vertiefung besonders einfach fertigen, bspw. durch Oberflächenfräsen auf der Mantelfläche des Gehäuses. Die Ausgestaltung integriert das Montageplättchen zudem flächig in die Gehäusewand und ermöglicht dadurch eine einfache Reinigung des Gehäuses, was insbesondere in schmutzintensiven Umgebungen von Vorteil ist. Darüber hinaus ermöglicht diese Ausgestaltung eine besonders einfache und schnelle Montage.

In einer weiteren Ausgestaltung weist die Vertiefung eine polygonale Innenkontur, vorzugsweise mit abgerundeten Ecken, auf, und das Montageplättchen weist eine polygonale Außenkontur auf, die in die polygonale Innenkontur eingepasst ist.

Die polygonale Innenkontur ermöglicht auf einfache und elegante Weise eine verdrehsichere Fixierung des Montageplättchens in der Aufnahme, da das Plättchen sich in einer solchen Innenkontur verkeilt. Die abgerundeten Ecken erlauben darüber hinaus die Verwendung eines robusten Fräskopfes mit relativ großem Radius und bietenden Vorteil, dass das Einlegen und ggf. spätere Entnehmen des Montageplättchens aus der Aufnahme vereinfacht wird.

In einer weiteren Ausgestaltung weist das Montageplättchen einen auskragenden Zapfen auf, der in die topfartige Vertiefung eingreift. Vorzugsweise besitzt das Montageplättchen mehrere auskragende Zapfen, die in mehrere topfartige Vertiefungen eingreifen. In einigen Ausführungsbeispielen sind die Zapfen umgebogene Stege am Außenrand des Montageplättchens. In weiteren Ausführungsbeispielen können die Zapfen zylindrische, konische oder anderweitig geformte Bolzen sein, die an dem Montageplättchen befestigt sind, etwa durch Einpressen, Ankleben, Löten o.ä.

Diese Ausgestaltung macht es möglich, die eine oder mehreren topfartigen Vertiefungen als einfache Sacklochbohrungen herzustellen. Dementsprechend kann diese Ausgestaltung besonders kostengünstig realisiert werden. Darüber hinaus kann diese Ausgestaltung sehr vorteilhaft mit den zuvor genannten Ausgestaltungen kombiniert werden, in denen das Montageplättchen vollflächig in eine (weitere) Vertiefung eingelegt wird, um eine besonderes starke Verdrehsicherung und/oder eine besonders exakte Ausrichtung der Anschlusskomponente zu erhalten.

In einer weiteren Ausgestaltung ist die zweite Durchgangsöffnung außermittig in dem Montageplättchen angeordnet.

Diese Ausgestaltung trägt dazu bei, dass das Montageplättchen besonders hohe Drehmomente aufnehmen kann, wenn die Anschlusskomponente montiert wird, ohne dass sich die Drehposition des Plättchens relativ zu dem Gehäuse nennenswert verändert. In einigen Ausführungsbeispielen dieser Ausgestaltung kann das Montageplättchen eine ovale oder sogar kreisrunde Außenkontur besitzen und sich trotzdem verdrehsicher in einer Vertiefung am Gehäuse verkeilen, weil ein Drehmoment beim Befestigen der Anschlusskomponente außermittig in das Montageplättchen eingeleitet wird. Die Ausgestaltung ermöglicht eine besonders elegante und kostengünstige Realisierung.

In einer weiteren Ausgestaltung ist die erste Durchgangsöffnung kreisrund.

In dieser Ausgestaltung lässt sich die Durchgangsöffnung besonders einfach herstellen, indem die Öffnung vorzugsweise gebohrt wird. So kann eine Anschlusskomponente auch an den Stellen des Gehäuses angeordnete werden, an denen ein Stanzen oder Räumen einer passgenauen und exakten Öffnung nicht möglich ist, insbesondere bei rohrförmigen Strangguss- oder Strangpressprofilen mit relativ kleinem Rohrdurchmesser.

In einer weiteren Ausgestaltung ist die Anschlusskomponente ein M8-oder M12-Steckverbinder.

In dieser Ausgestaltung ist eine besonders einfache Anbindung an gängige Feldbussysteme möglich. Bevorzugt können bereits vorhandene M8/M12-Steckverbinder mit der neuen Montagehilfe weiterverwendet werden, wobei das Montageplättchen den großen Vorteil bietet, dass die Ausrichtung des M8/M12-Steckverbinders relativ zu dem Elektronikteil im Inneren des Gehäuses sehr einfach und flexibel bestimmt werden kann. In einigen vorteilhaften Ausführungsbeispielen ist die gerade Innenkontur der zweiten Durchgangsöffnung nämlich schräg zu der Längsachse des Gehäuses angeordnet. Unterschiedliche Montageplättchen ermöglichen damit unterschiedliche Ausrichtungen des M8/M12-Steckverbinders bei gleichem

In einer weiteren Ausgestaltung weist die Anschlusskomponente eine Dichtung auf, die im Bereich der Aufnahme angeordnet ist, wobei die Aufnahme, Anschlusskomponente und Dichtung vorzugsweise zusammen eine Schutzart von mindestens IP67 erfüllen.

In dieser Ausgestaltung ist es möglich, das Automatisierungsgerät auch unter rauen Bedingungen einzusetzen. Die Dichtung verhindert, dass Staub oder Feuchtigkeit ins Innere des Gehäuses eindringen kann. Besonders bevorzugt handelt es sich bei der Dichtung um einen O-Ring, wie er bei einer Vielzahl von M8/M12-Rundsteckverbindern vorgesehen ist. Werden entsprechende M8/M12-Rundsteckverbindern eingesetzt, werden keine zusätzlichen Komponenten benötigt, um eine Schutzart von IP67 an der Anschlusskomponente zu ermöglichen.

In einer weiteren Ausgestaltung weist das Montageplättchen Grate auf, die in die Wand und/oder in die Anschlusskomponente einschneiden. Vorzugsweise stehen die Grate in einer Richtung, die in etwa parallel zu einer Achse verlaufen, die senkrecht zu der ersten Durchgangsöffnung liegt. Besonders bevorzugt sind die Grate an der Innenkontur der zweiten Durchgangsöffnung und/oder am Außenrand des Montageplättchen angeordnet.

In dieser Ausgestaltung lässt sich besonderes einfach eine Schirmanbindung zwischen dem Gehäuse, der Montagehilfe und der Anschlusskomponente erzeugen. Die Grate werden vorzugsweise bereits beim Herstellen des Montageplättchen bzw. beim Herstellen der zweiten Durchgangsöffnung gebildet, insbesondere durch Stanzen. Dementsprechend sind die Grate vorzugsweise Stanzgrate, die in der Regel unerwünschte Nebenprodukte eines Stanzvorgangs sind und üblicherweise in einem separaten Bearbeitungsschritt entfernt werden. Hier werden die Grate zur verbesserten Schirmanbindung verwendet, indem sie bewusst erhalten und bei der Montage in den Grund der Vertiefung bzw. in die Anschlusskomponente eingedrückt werden. So entsteht eine verbesserte elektrische Verbindung zwischen den Komponenten. Ein separater Zahnring, wie er häufig für eine Schirmanbindung verwendet wird, wird nicht benötigt.

In einer weiteren Ausgestaltung weist das Montageplättchen eine 8-kantige polygonale Außenkontur, vorzugsweise mit Innenwinkeln von jeweils 135°, auf.

In dieser Ausgestaltung werden Kräfte, die auf das Montageplättchen wirken, bspw. Kräfte, die durch ein Verdrehen der Anschlusskomponente oder durch Zug an diese entstehen, sehr gut auf das Gehäuse übertragen. Für eine gleichmäßige Kraftübertragung sind vorzugsweise je zwei Kanten parallel zu einander angeordnet. Darüber hinaus ermöglicht diese Ausgestaltung relative lange, gerade und scharfe Grate, die vorteilhaft zur Schirmanbindung genutzt werden können.

In einer weiteren Ausgestaltung weist das Montageplättchen eine Oberfläche mit einem flächigen Bereich auf, wobei der flächige Bereich aufgeraut ist, vorzugsweise mit einer gitterartigen Struktur.

In dieser Ausgestaltung wird eine Schirmanbindung zwischen dem Gehäuse und der Anschlusskomponente durch eine aufgeraute Oberfläche des Montageplättchens verbessert. Die gitterartige Struktur kann sehr kostengünstig durch Stanzen und/oder Fräsen erzeugt werden.

In einer weiteren Ausgestaltung besitzt das Gehäuse einen rohrförmigen Hohlkörper, insbesondere eine längliches Strangguss- oder Strangpressprofil, an dem die Aufnahme ausgebildet ist.

In dieser Ausgestaltung ist der Grundkörper des Gehäuses besonders günstig zu fertigen. Durch Stranggießen und/oder -pressen lassen sich besonders einfach und kostengünstig rohrartige Profile mit individuellen Querschnitten herstellen, die sehr robust sind. Der Hohlkörper lässt sich somit aus einem Stück fertigen. Die geschlossene umlaufende Mantelfläche bietet dabei besonders guten Schutz gegen Staub und Feuchtigkeit. Andererseits bereiten gerade solche Hohlkörper große Schwierigkeiten, wenn eine Anschlusskomponente passgenau und in einer definierten Orientierung montiert werden soll, da ein solcher Hohlkörper nicht ohne Weiteres durch Stanzen, Räumen oder andere kostengünstige Verfahren weiter bearbeitet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung eines Ausführungsbeispiels des neuen Automatisierungsgerätes,
- Fig. 2: eine explosionsartige Darstellung des Ausführungsbeispiels aus Fig. 1,
- Fig. 3: eine Draufsicht auf Elemente des Ausführungsbeispiels aus Fig. 1,
- Fig. 4: Seitenansichten und Querschnitte des Ausführungsbeispiels aus Fig. 1,
- Fig. 5: zwei Detailansichten des Ausführungsbeispiels aus Fig. 4,
- Fig. 6: eine perspektivische Darstellung einzelner Montageschritte gemäß einem bevorzugten Verfahren,
- Fig. 7: mehrere Ansichten eines bevorzugten Ausführungsbeispiels des neuen Montageplättchens,
- Fig. 8: ein weiteres Ausführungsbeispiel in einer Detailansicht,
- Fig. 9: ein weiteres Ausführungsbeispiel in einer Detailansicht,
- Fig. 10: ein weiteres Ausführungsbeispiel für ein Montageplättchen, und
- Fig. 11: noch ein weiteres Ausführungsbeispiel für ein Montageplättchen.

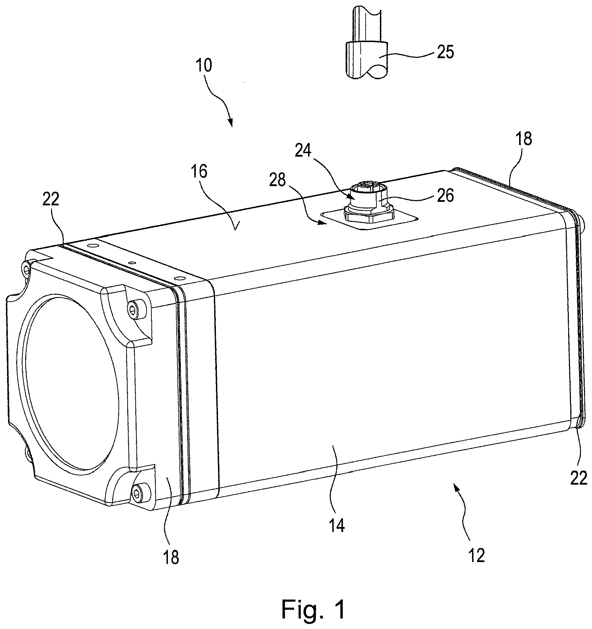

In Fig. 1 ist ein Ausführungsbeispiel des neuen Automatisierungsgeräts in seiner Gesamtheit mit der Bezugsziffer 10 bezeichnet. In diesem Ausführungsbeispiel ist das Automatisierungsgerät 10 ein Kamerasensor, der beispielsweise zur Überwachung eines Gefahrenbereichs verwendet wird, insbesondere als Teil einer mitlaufenden Schutzeinrichtung an einer Presse. Es versteht sich jedoch, dass die Erfindung nicht auf derartige Sensoren beschränkt ist und auch bei anderen Automatisierungsgeräten verwendet werden kann.

Die Sensoreinheit 10 besitzt ein Gehäuse 12, welches hier einen länglichen, rohrartigen Grundkörper 14 mit einer im Wesentlichen geschlossenen Mantelfläche 16 und Öffnungen an den längsseitigen Enden aufweist. Vorzugsweise handelt es sich bei dem länglichen Grundkörper 14 um ein Metall- oder Kunststoffprofil, etwa ein Aluminiumprofil, welches im Strangguss- oder Strangpressverfahren hergestellt worden ist. Derartige Profile können besonders günstig in großen Stückzahlen gefertigt werden und sind aufgrund der geschlossenen Mantelfläche 16 besonders gut gegen das Eindringen von Staub und Feuchtigkeit geschützt. Zudem sind einstückige Profile sehr stabil und robust. Probleme kann allerdings die Montage von Komponenten in oder an dem Grundkörper 14 bereiten, weil es schwierig ist, mit Montage- oder Bearbeitungswerkzeugen in dem umschlossenen Hohlraum zu arbeiten. Zudem ist eine Stanz- oder Räumbearbeitung nicht ohne weiteres möglich.

Die beiden endseitigen Öffnungen des Grundkörpers 14 sind hier mit je einer Verschlusskappe 18 verschraubt, die den Grundkörper 14 in Längsrichtung verschließen. In einer der Verschlusskappen 18 ist in diesem Ausführungsbeispiel eine transparente Objektivöffnung 20 eingelassen, hinter der sich die Optik des kamerabasierten Sensors verbirgt. Vorzugsweise sind die Verschlusskappen 18 und/oder weitere Öffnungen im Gehäuse 12 mit Dichtungen 22 versehen, um den Grundkörper 14 möglichst dicht zu verschließen, so dass weder Feuchtigkeit noch Schmutz in das Innere des Gehäuses 12 gelangen können. Besonders bevorzugt sind der Grundkörper 14, die Verschlusskappen 18 und die Dichtungen 22 zusammen so ausgelegt, dass das Gehäuse 12 insgesamt die Schutzart IP67 erfüllt, d.h. dass das Gehäuse 12 staubdicht ist und die umhäuste Elektronik vollständig gegen Berührungen geschützt ist. Ebenso ist ein derartiges Gehäuse 12 dafür ausgelegt, zeitweise untergetaucht zu werden, ohne dass Wasser ins Innere des Gehäuses 12 eindringt. Es versteht sich, dass es sich hierbei um ein bevorzugtes Ausführungsbeispiel des Gehäuses 12 handelt. Darüber hinaus können auch andere Gehäuseformen für die vorliegende Erfindung verwendet werden.

Mit der Bezugsziffer 24 ist eine Anschlusskomponente bezeichnet, die am Grundkörper 14 angeordnet ist und dazu dient, ein Signal- und/oder Versorgungskabel 25 an dem Gehäuse 12 lösbar zu befestigen. Über die Anschlusskomponente 24 können Ein- und Ausgangssignale mit der Sensoreinheit ausgetauscht werden. Alternativ oder ergänzend kann es sich bei der Anschlusskomponente 24 um einen Versorgungsanschluss handeln, über den eine Spannungsversorgung erfolgt. Vorzugsweise handelt es sich bei der Anschlusskomponente 24, wie hier gezeigt, um einen M12-Steckverbinder. Alternativ sind auch andere Anschlusskomponenten denkbar, beispielsweise M8-Steckverbinder, RJ-45-Steckverbinder (ggf. mit geringer Schutzart) oder ein proprietärer Steckverbinder. Ebenso kann alternativ zu der hier gezeigten Anschlussbuchse 26, d.h. einem weiblichen Steckerteil, ein männliches Steckerteil verwendet werden. Der hier bevorzugte M12-Steckverbinder kann sowohl für eine direkte Verdrahtung des Sensors in einen Schaltschrank hinein als auch zum Anschluss an gängige Feldbussysteme dienen.

Die Anschlusskomponente 24 ist in diesem Ausführungsbeispiel mit ihrer Längsachse senkrecht zur Mantelfläche 16 angeordnet. Die senkrechte Anordnung ist bevorzugt, da so Anschlussstecker und Leitungen (hier nicht dargestellt) senkrecht vom Grundkörper 14 weg führen können. Auf diese Weise kann das Gehäuse 12 in Längsrichtung kompakt gehalten werden, so dass sich die Länge des Gehäuses 12 maßgeblich aus der Länge des integrierten funktionsbestimmenden Elektronik- und/oder Optikteils bestimmt. Darüber hinaus ist eine derartige Anordnung vorteilhaft für Sensoren oder Aktoren, deren Wirkungsbereiche sich bis an die Ränder des Gehäuses 12 erstrecken oder für Sensoren, die wie in diesem Ausführungsbeispiel in eine bestimmte Richtung wirken.

Die Anschlusskomponente 24 ist über eine Montagehilfe 28 am Gehäuse 12 befestigt. Die Montagehilfe 28 beinhaltet, wie in den nachfolgenden Figuren näher erläutert, mehrere Elemente und ermöglicht ein einfaches, komfortables und sicheres Fixieren der Anschlusskomponente 24 an dem Gehäuse 12 in einer definierten Position und Ausrichtung. Insbesondere verhindert die Montagehilfe 28, dass die Anschlusskomponente 24 um ihre Längsachse verdreht werden kann, was aufgrund des im Gehäuse 12 angeordneten Elektronikteils wichtig sein kann.

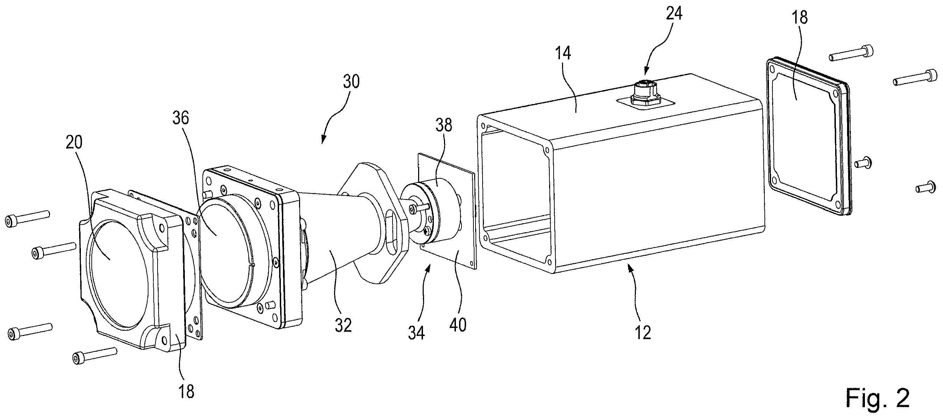

Fig. 2 zeigt das Ausführungsbeispiel der Fig. 1 in einer explosionsartigen Darstellung. Gleiche Bezugsziffern bezeichnen gleiche Elemente. Die Explosionsdarstellung zeigt hier einen optoelektronischen Teil 30. Man sieht hier, dass die Dimensionierung des Gehäuses 12 maßgeblich von der Dimensionierung des Teils 30 abhängig ist. Um das Automatisierungsgerät 10 insgesamt platzsparend aufzubauen, ist das Gehäuse 12 vorzugsweise die Abmessungen des Teils 30 angepasst.

Im hier gezeigten Ausführungsbeispiel weist der optoelektronische Teil einen länglichen Objektivkörper 32, einen Elektronikteil 34 und eine Optik 36 auf. Diese Teile sind hier vollständig im Gehäuse 12 integriert und so vor Schmutz und äußeren Einwirkungen geschützt. Die Optik 36 ist hinter der Objektivöffnung 20 in der Verschlusskappe 18 angeordnet. Am gegenüberliegenden Ende des Objektivkörpers 32 ist der Elektronikteil 34 mit einem Bildsensor 38, bspw. einen CMOS-Sensor, sowie vorteilhafterweise die weitere Elektronik des Automatisierungsgerätes 10 auf einer Leiterplatte 40 angeordnet. Die weitere Elektronik umfasst bspw. Steuer-, Kommunikations- und Versorgungseinheiten für das Automatisierungsgerät 10.

Der Elektronikteil 34 kann über die Anschlusskomponente 24 Steuersignale mit einer externen Steuereinheit austauschen und/oder mit einer Versorgungsspannung versorgt werden. Hierzu ist der Elektronikteil 34 über ein hier nicht näher dargestelltes Flachbandkabel mit der Anschlusskomponente 24 elektrisch verbunden.

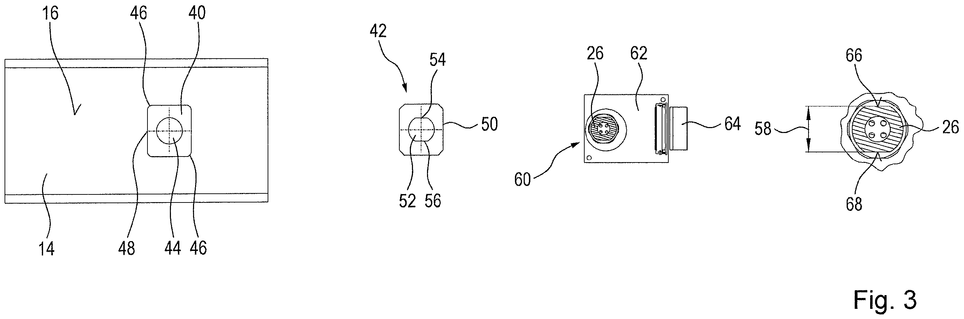

Der Aufbau der Anschlusskomponente 24 und der zugehörigen Montagehilfe 28 ist mit Bezug auf die nachfolgenden Figuren 3 bis 11 näher erläutert. Fig. 3 zeigt zunächst die Anschlusskomponente 24 sowie die einzelne Elemente der Montagehilfe 28 in einer Draufsicht. Die Montagehilfe 28 beinhaltet hier im Wesentlichen zwei Elemente, nämlich eine topfartige Vertiefung 40 am Grundkörper 14 des Gehäuses 12 und ein separates Montageplättchen 42, das in bevorzugten Ausführungsbeispielen zerstörungsfrei lösbar an dem Grundkörper 14 angeordnet ist.

Die Vertiefung 40 ist hier eine annähernd rechteckige Vertiefung in der Mantelfläche 16 des Grundkörpers 14 und weist - vorzugsweise zentral - eine erste Durchgangsöffnung 44 auf, die in das Innere des Gehäuses 12 führt. Prinzipiell könnte die Vertiefung 40 auf der Innenseite des Gehäuses 12 angeordnet sein, wenn auch das Montageplättchen 42 von der Innenseite des Gehäuses her in die Vertiefung 40 eingelegt wird. Bevorzugt ist die Vertiefung 40 aber an der Außenseite des Gehäuses 12 angeordnet, so dass das Montageplättchen 42 von außen in die Vertiefung 40 eingelegt werden kann.

Vorzugsweise wird die Vertiefung 40 durch einen Oberflächenfräsvorgang in die äußere Mantelfläche 16 des Gehäuses 12 eingebracht. Die Ecken 46 der Vertiefung 40 sind in diesem Ausführungsbeispiel für den Verdrehschutz der Anschlusskomponente 24 von untergeordneter Bedeutung, da ein Verdrehen des Montageplättchens 28 relativ zu dem Grundkörper 14 verhindert wird, sobald das Montageplättchen mit einem Formschluss an den geraden Rändern 48 der Vertiefung 40 anliegt. Die Ecken 46 müssen daher nicht präzise ausgebildet sein und sind vorzugweise abgerundet, um eine einfache Fräsbearbeitung zu ermöglichen. Allgemein kann die Vertiefung in bevorzugten Ausführungsbeispielen polygonal sein, also etwa dreieckig, viereckig, fünfeckig o.ä. Prinzipiell könnte die Vertiefung 40 aber auch eine ovale oder kreisförmige Kontur haben, wenn ein Verdrehen des Montageplättchens 28 in der Vertiefung 40 verhindert ist, sei es beispielsweise durch die ovale Kontur oder einen oder mehrere Zapfen, die in eine hier nicht dargestellte Bohrung am Grund der Vertiefung eingreifen.

Die hier gezeigte, weitgehend rechteckige Vertiefung 40 mit abgerundeten Ecken und parallel gegenüberliegenden Rändern lässt sich sehr leicht durch einen Oberflächenfräsvorgang mit einem Fräskopf mit relativ großem Durchmesser realisieren. Durch die Verwendung eines großen Fräskopfes ist der Fräsvorgang sehr schnell und daher kostengünstig durchführbar.

Besonders bevorzugt kann auch die Durchgangsöffnung 44 in demselben Bearbeitungsvorgang erstellt werden wie die Vertiefung 40. Vorzugsweise handelt es sich daher, wie in diesem Ausführungsbeispiel gezeigt, um eine kreisrunde Durchgangsöffnung 44, deren lichter Innendurchmesser größer ist als ein entsprechender Außendurchmesser der Anschlusskomponente 24. Wie bei der Vertiefung 40 ist auch bei der Durchgangsöffnung 44 nur eine vergleichsweise geringe Präzision erforderlich, da auch die Form der Durchgangsöffnung 44 nicht für die exakte Positionierung und Ausrichtung der Anschlusskomponente 24 maßgeblich ist. Vorzugsweise sind nur ein Werkzeug und ein Bearbeitungsschritt notwendig, um sowohl die Vertiefung 40 als auch die Durchgangsöffnung 44 zu fertigen. Alternativ zum Fräsen kann die Durchgangsöffnung 44 auch eine einfache Bohrung sein. Sowohl Fräsen als auch Bohren sind Bearbeitungsvorgänge, die auch an kleinen Gehäusetypen und -formen einfach durchgeführt werden können. Die Bearbeitung des Grundkörpers 14 für die Aufnahme der Anschlusskomponente 24 gestaltet sich somit sehr einfach und reduziert so die Kosten für die Herstellung des Gehäuses 12.

Das Montageplättchen 42 ist ein separates, vom Gehäuse 12 unabhängig gefertigtes Bauteil, welches vorzugsweise in großen Stückzahlen günstig produziert werden kann. Besonders bevorzugt wird das Montageplättchen 42 aus einem Blech herausgestanzt. Das Montageplättchen 42 hat hier die Form einer ebenen dünnen Platte mit der Fläche A. Die Plattendicke h ist gegenüber den Abmessungen in der Fläche (Länge I, Breite b) klein.

Der durch die Plattendicke h definierte Außenrand 50 des Montageplättchens 42 weist hier eine 8-eckige Außenkontur auf. Die Außenkontur ist so ausgebildet ist, dass sie mit der Innenkontur 48 der Vertiefung 40 zumindest abschnittsweise einen Formschluss bildet, sobald das Montageplättchen 42 in die Vertiefung 40 eingelegt ist. Kräfte und Drehmomente, die parallel zur Fläche A auf das Montageplättchen 42 einwirken, werden über den Formschluss auf das Gehäuse 12 übertragen. Die Dimensionen (I x b x h) des Montageplättchen 42 entsprechen in bevorzugten Ausführungsbeispielen im Wesentlichen den Dimensionen der Vertiefung 40. Das Montageplättchen 42 füllt somit die Vertiefung 40 weitgehend aus, so dass eine ebene Mantelfläche 16 erhalten bleibt.

Im vorliegenden Ausführungsbeispiel bildet der Rand 50 des Montageplättchens 52 an jeweils 2 gegenüberliegenden Seiten mit dem Rand 48 der Vertiefung einen Formschluss. Bei der achtseitigen Kontur des Rands 50 des Montageplättchens 52 liegen sich hier je zwei gleichlange Seiten parallel gegenüber. Die Seiten weisen eine erste oder eine zweite Länge auf, wobei die aneinander liegenden Seiten abwechselnd die erste oder zweite Länge aufweisen. Vorzugsweise ist die erste Länge um ein Vielfaches größer als die zweite Länge, so dass das Montageplättchen 42 im Wesentlichen einem Rechteck entspricht, dessen rechtwinklige Ecken je durch zwei 45°-Winkel abgeschrägt sind.

Das Montageplättchen 42 weist darüber hinaus eine zweite Durchgangsöffnung 52 auf. In diesem Ausführungsbeispiel ist die zweite Durchgangsöffnung 52 zentral aus der Fläche A des Montageplättchen 42 herausgestanzt oder -geschnitten. Vorzugsweise wird die zweite Durchgangsöffnung 52 bereits beim Stanzen des Montageplättchens 42 miterstellt. Durch die hier mittige Anordnung liegt die zweite Durchgangsöffnung 52 zentral über der Durchgangsöffnung 44 der Vertiefung 40, sobald das Montageplättchen 42 in die Vertiefung 40 eingelegt ist. Die zweite Durchgangsöffnung 52 bildet zusammen mit der Durchgangsöffnung 44 eine Halterung, in die die Anschlusskomponente 24 eingeführt werden kann. Im Gegensatz zur ersten Durchgangsöffnung 44 weist die zweite Durchgangsöffnung 52 eine Innenkontur mit mindestens einem geraden Abschnitt 54 auf. In dem hier gezeigten bevorzugten Ausführungsbeispiel besitzt die zweite Durchgangsöffnung darüber hinaus einen zweiten geraden Abschnitt 56. Eine derartige Innenkontur wird auch als Zweikant bezeichnet, wobei eine sog. Schlüsselweite 58 durch den Abstand zwischen den beiden geraden Abschnitten 54, 56 definiert wird. Die Durchgangsöffnung 44 und die zweite Durchgangsöffnung 52 sind folglich nicht deckungsgleich, wenn sie übereinanderliegen und bilden so eine zweistufige Halterung mit einem runden Aufnahmebereich und einem Bereich mit mindestens einer geraden Kante 54.

Mit der Bezugsziffer 60 ist hier ein erster Teil der Anschlusskomponenten 24 dargestellt. Hierbei handelt es sich um eine Steckbuchse 26, die hier auf einer Anschlussleiterplatte 62 angelötet ist. An der Anschlussleiterplatte 62 ist ein Flachbandkabel 64 angedeutet, welches die Anschlusskomponente 24 mit der übrigen Elektronik des Automatisierungsgeräts 10 verbindet. Die Steckbuchse 26 hat hier einen Grundkörper mit zwei geraden Seitenflächen 66, 68, die das Gegenstück zum Zweikant 54, 56 der zweiten Durchgangsöffnung 52 bilden. Wie anhand der nachfolgenden Figuren näher erläutert, bilden der Zweikant 54, 56 zusammen mit den ebenen Seitenflächen 66, 68 einen Verdrehschutz für die Anschlusskomponente 24.

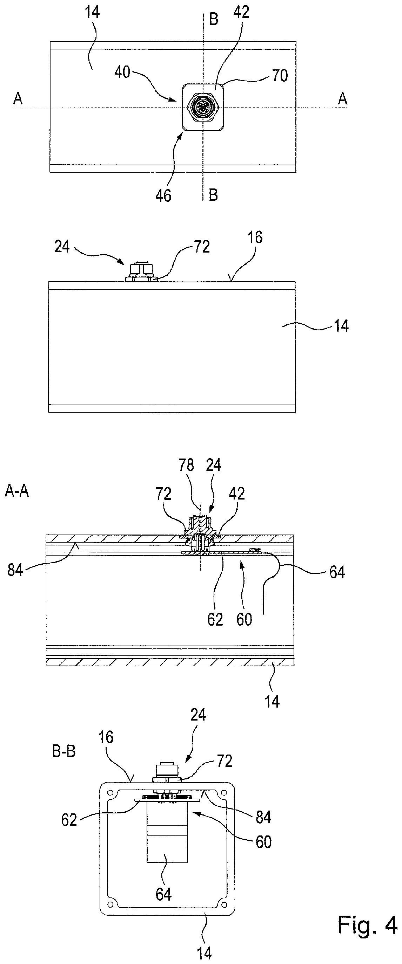

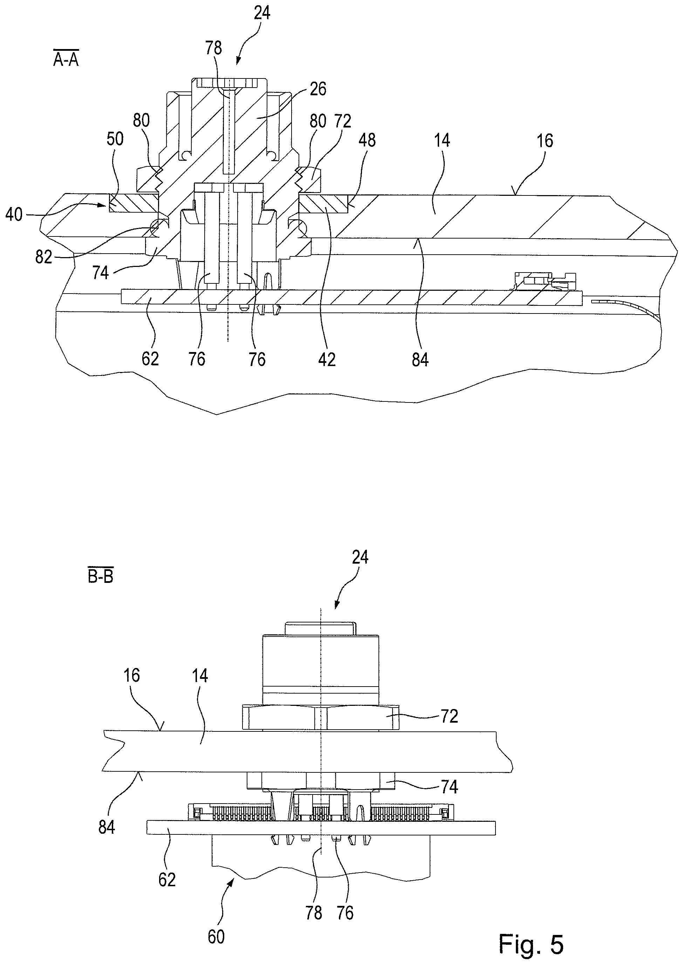

Fig. 4 und 5 zeigen das vorherige Ausführungsbeispiel im montierten Zustand in verschiedenen Ansichten und Vergrößerungen. Zur Vereinfachung sind auch hier die übrigen Komponenten des Automatisierungsgerätes 10 ausgeblendet.

Fig. 4 zeigt neben einer Draufsicht und einer Seitenansicht Querschnitte entlang der eingezeichneten Achsen A-A und B-B. In der Fig. 5 werden die Querschnitte A-A und B-B ausschnittsweise in einer vergrößerten Darstellung gezeigt. Aus der Draufsicht und der Seitenansicht ist zu erkennen, dass das Montageplättchen 42 die Vertiefung 40 praktisch ausfüllt. An den seitlichen Stoßstellen zwischen dem Montageplättchen 42 und der Vertiefung 40 bildet sich parallel zu den Achsen A und B je ein Formschluss. In den abgerundeten Ecken 46 der Vertiefung 40 bleiben Freiräume 70, über die sich das Montageplättchen 42 leicht mit Hilfe eines Werkzeugs, beispielsweise eines Schraubenziehers, aus der Vertiefung 40 entnehmen lässt.

Wie den vergrößerten Querschnitten A-A und B-B (Fig. 5) zu entnehmen ist, sind in diesem bevorzugten Ausführungsbeispiel das Montageplättchen 42 und die Vertiefung 40 so ausgebildet, dass die Oberfläche des Montageplättchens 42 im montierten Zustand bündig mit der Mantelfläche 16 abschließt. Die Anschlusskomponente 24 weist einen ersten Steckerteil 60 und einen zweiten Steckerteil 72 auf. Der erste Steckerteil 60 ragt hier durch die Durchgangsöffnung 44 aus dem Gehäuse 12 heraus. Ein am ersten Steckerteil 60 verlaufender Flansch 74 hält den ersten Steckerteil 60 an der Innenseite des Grundkörpers 14 fest. Der Flansch 74 verhindert, dass der erste Steckerteil 60 durch die Durchgangsöffnung 44 hindurchtreten kann.

Die Anschlussleiterplatte 62, über welche die Anschlusskomponente 24 hier mit der Sensorelektronik verbunden ist, ist vorteilhaft parallel zur Mantelfläche 16 des Grundkörpers 14 angeordnet. Die Anschlusskomponente 24 ist auf diese Weise besonders platzsparend mit dem Elektronikteil verbindbar. Die Verwendung einer Anschlussleiterplatte 62 hat darüber hinaus den Vorteil, dass Standardsteckverbinder mit geraden Anschlusspins 76 verwendet werden können. Standardsteckverbinder mit geraden Anschlusspins 76 sind gegenüber Verbindern mit abgewickelten Anschlusspins einfacher zu fertigen und daher günstiger.

Die zwei Seitenflächen 66, 68 des ersten Steckerteils 60 wirken mit der zweiten Durchgangsöffnung 52 des Montageplättchens 42 zusammen und fixieren die Anschlusskomponente 24 einschließlich der Anschlussleiterplatte 62 gegen ein Verdrehen um die Montageachse 78, welche hier senkrecht zur Mantelfläche 16 steht. Der erste Steckerteil 60 ist mittels des zweiten Steckerteils 72 am Montageplättchen 42 fixiert. Hierzu weist der erste Steckerteil 60 hier ein Gewinde 80 auf, auf dass der zweite Steckerteil 72 aufgeschraubt werden kann. Der zweite Steckerteil 72 ist vorzugsweise, wie hier gezeigt, eine Schraubmutter, eine aufschraub- oder aufsteckbare Hülse, ein Splint, eine Kleberaupe, ein Klebefilm oder ein anderes Befestigungselement. Beim Montieren des zweiten Steckerteils 72 werden die dabei auftretenden Anzugskräfte über das Montageplättchen 42 und den Formschluss an den Rändern 48, 50 auf den Grundkörper 14 übertragen.

Oberhalb des Flansches 74 ist hier ein zusätzlicher O-Ring 82 angeordnet, der den ersten Steckerteil 60 einmal umläuft. Während der Montage wird der O-Ring 82 zwischen dem Flansch 74 und der Gehäuseinnenwand 84 verklemmt und bildet so eine Dichtung, die ein Eindringen von Feuchtigkeit oder Schmutz durch die Durchgangsöffnung 44 verhindert. Das Montageplättchen 42, die Vertiefung 40 und die Anschlusskomponente 24 sind folglich so ausgebildet, dass das Gehäuse 12 auch im Bereich der Vertiefung 40 ausreichend gegen das Eindringen von Fremdkörpern und Wasser geschützt ist und vorzugsweise eine Schutzart von IP67 aufweist.

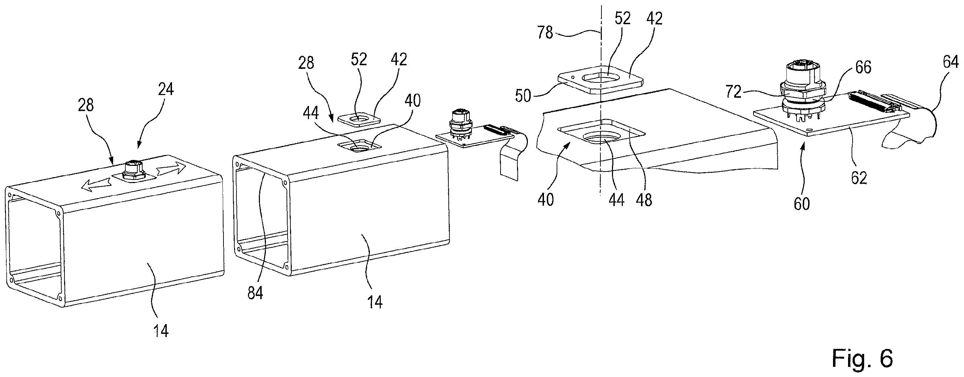

Mit Bezug auf die Fig. 6 wird im Folgenden die Montage eines bevorzugten Ausführungsbeispiels der Anschlusskomponente 24 und der Montagehilfe 28 näher erläutert. Die Montage der Anschlusskomponente 24 erfolgt vorzugsweise schrittweise in einer festgelegten Reihenfolge. In diesem Ausführungsbespiel wird zunächst der erste Steckerteil 60 mit der Anschlussleiterplatte 62 von Innen durch die Durchgangsöffnung 44 geführt. Die Durchgangsöffnung 44 ist, wie zuvor beschrieben, so ausgebildet, dass der erste Steckerteil 60 leicht in die Durchgangsöffnung 44 eingebracht werden kann, insbesondere ist der erste Steckerteil 60 im ersten Montageschritt noch um die Montageachse 78, die senkrecht zu Durchgangsöffnung 44 liegt, frei drehbar. Die Anschlusskomponente 24 kann somit werkzeuglos vom Gehäuseinneren in die Durchgangsöffnung 44 eingeführt werden.

Im folgenden Montageschritt wird das Montageplättchen 42 über den ersten Steckerteil 60 geführt, so dass die ebenen Seitenflächen 66, 68 der Anschlusskomponente 24 an den Kanten 54, 56 der zweiten Durchgangsöffnung 52 bündig anliegen. In dem bevorzugten Ausführungsbeispiel entspricht die Form des Querschnitts der Anschlusskomponente 24 der Kontur der zweiten Durchgangsöffnung 52. Die zweite Durchgangsöffnung 52 ist in diesem Fall passgenau auf den ersten Steckerteil 60 aufsteckbar. Durch das bündige Anliegen mindestens einer Seitenfläche 66, 68 an der Kante 54, 56 der zweiten Durchgangsöffnung 52 wird eine Drehung des ersten Steckerteils 60 um die Montageachse 78 unterbunden, sobald das Montageplättchen in der Vertiefung 40 liegt..

Das Montageplättchen 52 wird daher in die Vertiefung 40 eingelegt und mit dem zweiten Steckerteil 72 fixiert. Der zweite Steckerteil 72 ist hier eine Mutter, die auf das Gewinde 80 am ersten Steckerteil 60 aufgeschraubt wird. Die Mutter wirkt als Gegenstück zum Flansch 74, der an die Gehäuseinnenwand 84 gezogen wird. Der erste Steckerteil 60 und der zweite Steckerteil 72 fixieren so die Anschlusskomponente 24 gegen Herausziehen, während das Montageplättchen 52 im Zusammenwirken mit der Vertiefung 40 ein Verdrehen der Anschlusskomponente 24 verhindert. Vorteilhaft werden auch die Zugkräfte, die beim Anziehen des zweiten Steckerteils 72 auftreten, gleichmäßig durch den Formschluss an den Rändern zwischen Montageplättchen 42 und Vertiefung 40 auf das Gehäuse 12 übertragen.

Die wesentlichen Montageschritte finden bei der neuen Montagehilfe 28 somit außerhalb des Gehäuses 12 statt und könnten leicht durchgeführt werden. Auch beim Anziehen der Mutter 72 bleibt die Orientierung der Anschlusskomponenten um die Montageachse 78 erhalten, da das Montageplättchen als Verdrehsicherung wirkt.

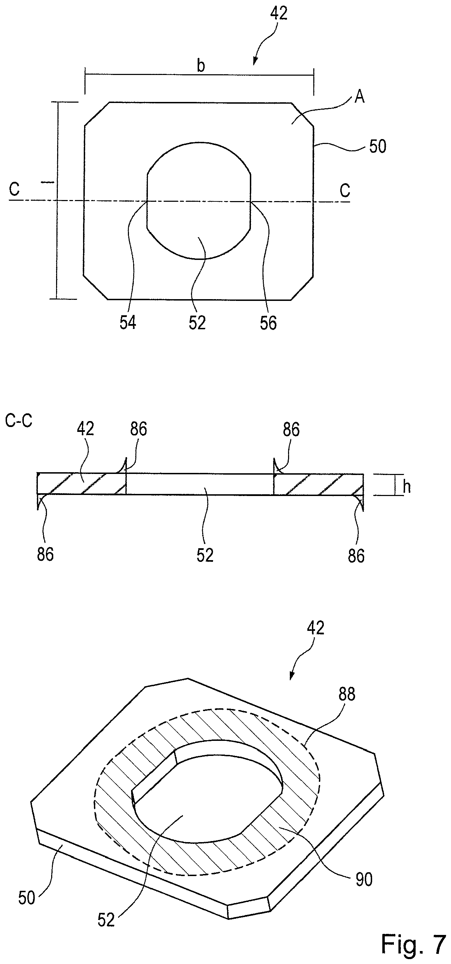

Fig. 7 zeigt ein vorteilhaftes Ausführungsbeispiel des Montageplättchens 42. Das Montageplättchen 42 ist hier in einer Draufsicht, in einer Seitenansicht und in einer perspektivischen Darstellung gezeigt. Das Montageplättchen 42 hat hier die gleiche Dimensionierung wie das Montageplättchen 42 gemäß den vorherigen Ausführungsbeispielen. Das Montageplättchen 42 weist hier jedoch an den Konturkanten Grate 86 auf. Besonders bevorzugt sind sowohl an den äußeren Konturkanten des Montageplättchen 42 als auch an der zweiten Durchgangsöffnung 52 gegenläufige Grate 86 vorgesehen. Die Grate 86 stehen von der Oberfläche des Montageplättchens in Richtung der Montageachse 78 ab und werden während der Montage entweder in die Vertiefung 40 oder in die Anschlusskomponente 24 gedrückt. Die Grate verbessern dabei die Kontaktsicherheit zwischen der Anschlusskomponente 24, dem Montageplättchen 42 und dem Grundkörper 14 des Gehäuses 12. Sehr vorteilhaft können die Grate 86 anstelle einer separaten Zahnscheibe o. dgl. verwendet werden.

Grate 86 entstehen regelmäßig beim Stanzen von Blechbauteilen und werden üblicherweise in einem separaten Arbeitsgang entfernt. Hier jedoch werden die Grate 86 vorteilhafterweise für eine verbesserte Kontaktsicherheit genutzt, insbesondere um eine elektrische Verbindung zwischen dem Gehäuse 12 und der Anschlusskomponente 24 zu bilden, die als Schirmanbindung bzw. Potentialerde dient.

Alternativ oder ergänzend kann darüber hinaus ein flächiger Bereich 88 auf der Oberfläche des Montageplättchens 42 aufgeraut seien, beispielsweise mit einer gitterartigen Struktur 90, die durch Schleif- oder Fräsbearbeitung hergestellt wird. Hierdurch wird die Kontaktsicherheit weiter verbessert.

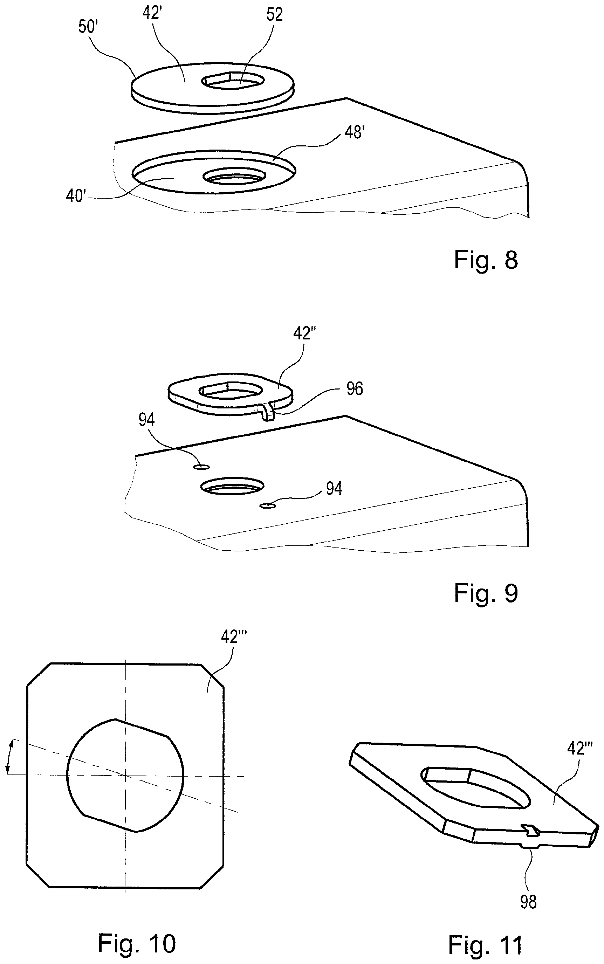

Fig. 8 zeigt ein weiteres Ausführungsbeispiel. In diesem Fall besitzt das Montageplättchen 42' eine kreisförmige Außenkontur 50'. Die Vertiefung 40' besitzt eine bündig passende, kreisförmige Innenkontur 48'. Die zweite Durchgangsöffnung 52 im Montageplättchen 42' ist in diesem Ausführungsbeispiel außermittig zu dem Montageplättchen 42' angeordnet. Dies hat zur Folge, dass ein Drehmoment beim Festziehen der Mutter 72 außermittig auf das Montageplättchen 42' übertragen wird und dadurch das Montageplättchen 42' in der Innenkontur 48' verkeilt. Somit wird auch in diesem Ausführungsbeispiel ein Verdrehschutz erreicht. Ergänzend hierzu könnten am Grund der Vertiefung 40' Sacklöcher (hier nicht dargestellt) vorgesehen sein, in die ein oder mehrere Zapfen (hier nicht dargestellt) des Montageplättchens eingreifen.

Ein Ausführungsbeispiel, das von Zapfen Gebrauch macht, ist in Fig. 9 gezeigt. In Diesem Fall bilden zwei Sacklöcher 94 jeweils eine topfförmige Vertiefung, die im Gegensatz zu den vorhergehenden Ausführungsbeispielen aber so klein ist, dass sie das Montageplättchen 42" nicht vollflächig aufnehmen kann. Allerdings besitzt das Montageplättchen 42" hier zwei abgebogene Laschen 96, die jeweils einen passgenauen Einsteckzapfen zum Einstecken in die Sacklöcher 94 bilden. Dieses Ausführungsbeispiel ermöglicht eine sehr einfache Bohrbearbeitung des Gehäusekörpers zum Herstellen der Aufnahme für das Montageplättchen 42". Anstelle oder zusätzlich zu den abgebogenen Laschen 96 könnte das Montageplättchen eingepresste Bolzen besitzen, die in die Sacklöcher eingreifen, um ein Drehmoment aufzunehmen und in das Gehäuse einzuleiten.

Fig. 10 zeigt ein weiteres Ausführungsbeispiel eines Montageplättchens 42"'. In diesem Fall ist die zweite Durchgangsöffnung 52 schräg zu den Hauptachsen des hier polygonalen Montageplättchens 42'" angeordnet. Dies macht es auf einfache Weise möglich, die Orientierung der Anschlusskomponente 24 um die Montageachse 78 zu variieren, indem man ein geeignetes Montageplättchen aus einem Satz von Montageplättchen mit unterschiedlichen Durchgangsöffnungen auswählt.

Fig. 11 zeigt ein weiteres Ausführungsbeispiel eines Montageplättchens 42"" mit einer oder mehreren "Warzen" 98, die durch einen Pressvorgang am Außenrand des Montageplättchens 42"" hergestellt sind. Auch die Warzen 98 können vorteilhaft in Sacklöcher 94 an der Gehäusewand 16 eingreifen, um ein Drehmoment auf das Gehäuse 12 zu übertragen.

In weiteren Ausführungsbeispielen können die Montageplättchen in sich gewölbt sein, um eine Federspannung nach Art einer Tellerfeder zu erzeugen. Eine solche Federspannung ist von Vorteil, um einen guten elektrischen und/oder mechanischen Kontakt zwischen dem Montageplättchen und der Gehäusewand zu erreichen.

## Patentansprüche

1. Automatisierungsgerät für eine automatisierte Anlage, insbesondere Kamerasensor,
mit einem Gehäuse (12), das einen Elektronikteil (34) umschließt,
mit einer Anschlusskomponente (24) zum Befestigen eines Kabels (25), wobei die Anschlusskomponente (24) mindestens eine plane Seitenfläche (66, 68) aufweist, und
mit einer Montagehilfe (28) zum Fixieren der Anschlusskomponente (24) an dem Gehäuse (12) in einer definierten Position,
wobei die Montagehilfe (28) eine Aufnahme (40) an einer Wand (16) des Gehäuses (12) und ein Montageplättchen (42) aufweist, das verdrehsicher in die Aufnahme (40) eingelegt ist,
wobei die Aufnahme (40) eine erste Durchgangsöffnung (44) beinhaltet, in die die Anschlusskomponente (24) hineinreicht,
wobei das Montageplättchen (42) eine zweite Durchgangsöffnung (52) mit einer geraden Innenkontur (54, 56) besitzt, die zusammen mit der ersten Durchgangsöffnung (44) eine Halterung für die Anschlusskomponente (24) bildet, und
wobei die mindestens eine plane Seitenfläche (66, 68) in der Halterung glatt an der geraden Innenkontur (54, 56) anliegt.

2. Automatisierungsgerät nach Anspruch 1, wobei die Anschlusskomponente (24) einen Körper (60) mit einem radial vorspringenden Flansch (74) und ein Befestigungselement (72) beinhaltet, wobei der Flansch (74) und das Befestigungselement (72) das Montageplättchen (42) in der Aufnahme (40) einklemmen.

3. Automatisierungsgerät nach einem der Ansprüche 1 oder 2, wobei die Aufnahme (40) eine topfartige Vertiefung in der Wand (16) beinhaltet, die das Montageplättchen (42) verdrehsicher an der Wand (16) fixiert.

4. Automatisierungsgerät nach Anspruch 3, wobei das Montageplättchen (42) vollflächig in die topfartige Vertiefung eingelegt ist.

5. Automatisierungsgerät nach Anspruch 3 oder 4, wobei die Vertiefung eine polygonale Innenkontur (48), vorzugsweise mit abgerundeten Ecken (46), aufweist, und wobei das Montageplättchen (42) eine polygonale Außenkontur (50) aufweist, die in die polygonale Innenkontur (48) eingepasst ist.

6. Automatisierungsgerät nach einem der Ansprüche 3 bis 5, wobei das Montageplättchen (42) einen auskragenden Zapfen aufweist, der in die topfartige Vertiefung eingreift.

7. Automatisierungsgerät nach einem der Ansprüche 1 bis 6, wobei die zweite Durchgangsöffnung (52) außermittig in dem Montageplättchen (42') angeordnet ist.

8. Automatisierungsgerät nach einem der Ansprüche 1 bis 7, wobei die erste Durchgangsöffnung (44) kreisrund ist.

9. Automatisierungsgerät nach einem der Ansprüche 1 bis 8, wobei die Anschlusskomponente (24) ein M8- oder M12-Steckverbinder ist.

10. Automatisierungsgerät nach einem der Ansprüche 1 bis 9, wobei die Anschlusskomponente (24) eine Dichtung (82) aufweist, die im Bereich der Aufnahme angeordnet ist.

11. Automatisierungsgerät nach einem der Ansprüche 1 bis 10, wobei das Montageplättchen (42) definierte Grate (86) aufweist, die in die Wand (16) und/oder in die Anschlusskomponente (24) einschneiden.

12. Automatisierungsgerät nach einem der Ansprüche 1 bis 11, wobei das Montageplättchen (42) eine Oberfläche mit einem flächigen Bereich (88) aufweist, wobei der flächige Bereich (88) aufgeraut ist, vorzugsweise mit einer gitterartigen Struktur (90).

13. Automatisierungsgerät nach einem der Ansprüche 1 bis 10, wobei das Gehäuse (12) einen rohrförmigen Hohlkörper (14), insbesondere ein längliches Strangpressprofil besitzt, an dem die Aufnahme (40) ausgebildet ist.

14. Verfahren zur Montage eines Automatisierungsgeräts (10) mit einem Elektronikteil (34), mit den Schritten:
- Bereitstellen eines rohrförmigen Hohlkörpers (14) zur Bildung eines Gehäuses (12),
- Bereitstellen einer Anschlusskomponente (24) zum Befestigen eines Kabels (25), wobei die Anschlusskomponente (24) mindestens eine plane Seitenfläche (66, 68) aufweist
- Herstellen einer Aufnahme (40) für ein definiertes Montageplättchen (42) an einer Wand (16) des Gehäuses (12),
- Herstellen einer ersten Durchgangsöffnung (44) durch die Wand (16) in der Aufnahme (40),
- Bereitstellen eines Montageplättchens (42), das eine zweite Durchgangsöffnung (52) mit einer geraden Innenkontur (54, 56) besitzt, und Einlegen des Montageplättchens (42) in die Aufnahme (40), so dass die zweite Durchgangsöffnung (52) zusammen mit der ersten Durchgangsöffnung (44) eine Halterung für die Anschlusskomponente (24) bildet,
- Durchstecken der Anschlusskomponente (24) durch die erste und die zweite Durchgangsöffnung (44, 52), und
- Befestigen der Anschlusskomponente (24), wobei das Montageplättchen (42) in der Aufnahme mit einem Formschluss verdrehsicher fixiert wird, und wobei die mindestens eine plane Seitenfläche (66, 68) glatt an der geraden Innenkontur (54, 56) anliegt.

## Claims

1. Automation device for an automated system, in particular camera sensor,
comprising a housing (12) which surrounds an electronics part (34),
comprising a connection component (24) for attaching a cable (25), wherein the connection component (24) has at least one planar side surface (66, 68), and
comprising a mounting aid (28) for fixing the connection component (24) to the housing (12) in a defined position,
wherein the mounting aid (28) has a mount (40) on a wall (16) of the housing (12) and a mounting plate (42) which is inserted into the mount (40) in a rotationally fixed manner,
wherein the mount (40) contains a first passage opening (44) into which the connection component (24) extends,
wherein the mounting plate (42) has a second passage opening (52) with a straight inner contour (54, 56) which, together with the first passage opening (44), forms a holder for the connection component (24), and
wherein the at least one planar side surface (66, 68) bears smoothly against the straight inner contour (54, 56) in the holder.

2. Automation device according to Claim 1, wherein the connection component (24) contains a body (60) with a radially projecting flange (74) and an attachment element (72), wherein the flange (74) and the attachment element (72) clamp the mounting plate (42) in the mount (40).

3. Automation device according to either of Claims 1 and 2, wherein the mount (40) contains a pot-like recess in the wall (16), which pot-like recess fixes the mounting plate (42) to the wall (16) in a rotationally fixed manner.

4. Automation device according to Claim 3, wherein the mounting plate (42) is inserted into the pot-like recess over its full surface area.

5. Automation device according to Claim 3 or 4, wherein the recess has a polygonal inner contour (48), preferably with rounded corners (46), and wherein the mounting plate (42) has a polygonal outer contour (50) which fits into the polygonal inner contour (48).

6. Automation device according to one of Claims 3 to 5, wherein the mounting plate (42) has a protruding pin which engages into the pot-like recess.

7. Automation device according to one of Claims 1 to 6, wherein the second passage opening (52) is arranged in the mounting plate (42') in an eccentric manner.

8. Automation device according to one of Claims 1 to 7, wherein the first passage opening (44) is circular.

9. Automation device according to one of Claims 1 to 8, wherein the connection component (24) is an M8 or M12 plug connector.

10. Automation device according to one of Claims 1 to 9, wherein the connection component (24) has a seal (82) which is arranged in the region of the mount.

11. Automation device according to one of Claims 1 to 10, wherein the mounting plate (42) has defined fins (86) which cut into the wall (16) and/or into the connection component (24).

12. Automation device according to one of Claims 1 to 11, wherein the mounting plate (42) has a surface with a flat region (88), wherein the flat region (88) is roughened, preferably with a grid-like structure (90).

13. Automation device according to one of Claims 1 to 10, wherein the housing (12) has a tubular hollow body (14), in particular an elongate extruded profile, on which the mount (40) is formed.

14. Method for mounting an automation device (10) comprising an electronics part (34), comprising the steps of:
- providing a tubular hollow body (14) for forming a housing (12),
- providing a connection component (24) for attaching a cable (25), wherein the connection component (24) has at least one planar side surface (66, 68),
- producing a mount (40) for a defined mounting plate (42) on a wall (16) of the housing (12),
- producing a first passage opening (44) through the wall (16) in the mount (40),
- providing a mounting plate (42) which has a second passage opening (52) with a straight inner contour (54, 56), and inserting the mounting plate (42) into the mount (40), so that the second passage opening (52), together with the first passage opening (44), forms a holder for the connection component (24),
- plugging the connection component (24) through the first and the second passage opening (44, 52), and
- attaching the connection component (24), wherein the mounting plate (42) is fixed in the mount with an interlocking connection in a rotationally fixed manner, and wherein the at least one planar side surface (66, 68) bears smoothly against the straight inner contour (54, 56).

## Revendications

1. Appareil d'automatisation pour installation automatisée, en particulier capteur à caméra, présentant
un boîtier (12) qui entoure une partie électronique (34),
un composant de raccordement (24) qui permet de fixer un câble (25), le composant de raccordement (24) présentant au moins une surface latérale plane (66, 68) et
un accessoire de montage (28) qui permet de fixer le composant de raccordement (24) sur le boîtier (12) dans une position définie,
l'accessoire de montage (28) présentant un logement (40) sur la paroi (16) du boîtier (12) et une plaquette de montage (42) insérée dans le logement (40) de manière à ne pas pouvoir tourner,
le logement (40) présentant une première ouverture de passage (44) dans laquelle s'engage le composant de raccordement (24),
la plaquette de montage (42) présentant une deuxième ouverture de passage (52) dotée d'un contour (54, 56) rectiligne qui forme avec la première ouverture de passage (44) un support pour le composant de raccordement (24),
la ou les surfaces latérales planes (66, 68) épousant le contour intérieur rectiligne (54, 56) du support.

2. Appareil d'automatisation selon la revendication 1, dans lequel le composant de raccordement (24) contient un corps (60) doté d'une bride (74) en saillie radiale et un élément de fixation (72), la bride (74) et l'élément de fixation (72) serrant la plaquette de montage (42) dans le logement (40).

3. Appareil d'automatisation selon l'une des revendications 1 ou 2, dans lequel le logement (40) possède un creux en forme de cuvette dans la paroi (16), qui fixe la plaquette de montage (42) sur la paroi (16) de telle sorte qu'elle ne puisse tourner.

4. Appareil d'automatisation selon la revendication 3, dans lequel la plaquette de montage (42) est insérée par toute sa surface dans le creux en forme de cuvette.

5. Appareil d'automatisation selon les revendications 3 ou 4, dans lequel le creux présente un contour intérieur (48) polygonal, de préférence à sommets (46) arrondis, la plaquette de montage (42) présentant un contour extérieur (50) polygonal qui s'adapte dans le contour intérieur polygonal (48).

6. Appareil d'automatisation selon l'une des revendications 3 à 5, dans lequel la plaquette de montage (42) présente un tourillon en saillie qui s'engage dans le creux en forme de cuvette.

7. Appareil d'automatisation selon l'une des revendications 1 à 6, dans lequel la deuxième ouverture de passage (52) est disposée au milieu à l'extérieur de la plaquette de montage (42').

8. Appareil d'automatisation selon l'une des revendications 1 à 7, dans lequel la première ouverture de passage (44) est circulaire.

9. Appareil d'automatisation selon l'une des revendications 1 à 8, dans lequel le composant de raccordement (24) est un raccord enfichable M8 ou M12.

10. Appareil d'automatisation selon l'une des revendications 1 à 9, dans lequel le composant de raccordement (24) présente un joint d'étanchéité (82) disposé au niveau du logement.

11. Appareil d'automatisation selon l'une des revendications 1 à 10, dans lequel la plaquette de montage (42) présente des barbes (86) définies qui s'engagent dans la paroi (16) et/ou dans le composant de raccordement (24).

12. Appareil d'automatisation selon l'une des revendications 1 à 11, dans lequel la plaquette de montage (42) présente une surface dotée d'une partie plane (88), la partie plane (88) étant rendue rugueuse de préférence par une structure (90) en forme de grille.

13. Appareil d'automatisation selon l'une des revendications 1 à 10, dans lequel le boîtier (12) possède un corps creux (14) en forme de tube, en particulier un profilé extrudé allongé, sur lequel le logement (40) est réalisé.

14. Procédé de montage d'un appareil d'automatisation (10) doté d'une partie électronique (34), le procédé comportant les étapes qui consistent à :
- prévoir un corps creux (14) de forme tubulaire en vue de former un boîtier (12),
- prévoir un composant de raccordement (24) destiné à fixer un câble (25), le composant de raccordement (24) présentant au moins une surface latérale plane (66, 68),
- dans une paroi (16) du boîtier (12), ménager un logement (40) pour une plaquette de montage (42) définie,
- ménager une première ouverture de passage (44) à travers la paroi (16) dans le logement (40),
- prévoir une plaquette de montage (42) qui présente une deuxième ouverture de passage (52) à contour intérieur rectiligne (54, 56) et insérer la plaquette de montage (42) dans le logement (40) de telle sorte que la deuxième ouverture de passage (52) forme avec la première ouverture de passage (44) un support pour le composant de raccordement (24),
- engager le composant de raccordement (24) dans la première et la deuxième ouverture de passage (44, 52) et
- fixer le composant de raccordement (24), la plaquette de montage (42) étant immobilisée en correspondance géométrique dans le logement de manière à ne pas pouvoir tourner, la ou les surfaces latérales planes (66, 68) épousant le contour intérieur rectiligne (54, 56).
